# EUROPEAN PATENT SPECIFICATION

(11) **EP 3 342 634 B1**
(45) Date of publication and mention of the grant of the patent: **28.10.2026**
(21) Application number: 15902297.9
(22) Date of filing: 27.08.2015
(51) Int. Cl.: B60M 3/06, B60L 7/14, B60M 3/02, H02J 3/06, H02J 3/38

(54) **AUXILIARY POWER SUPPLY DEVICE FOR STATION BUILDINGS**
HILFSSTROMVERSORGUNGSVORRICHTUNG FÜR STATIONSGEBÄUDE
DISPOSITIF D'ALIMENTATION ÉLECTRIQUE AUXILIAIRE POUR BÂTIMENTS DE GARE

(43) Date of publication of application: 04.07.2018
(73) Proprietor: Mitsubishi Electric Corporation, Chiyoda-ku Tokyo 100-8310 (JP)
(72) Inventor: TAKEOKA, Toshiaki, Tokyo 100-8310 (JP); MATSUMOTO, Shinichi, Tokyo 100-8310 (JP); ISHIKURA, Shuji, Tokyo 102-0073 (JP)
(74) Representative: Witte, Weller & Partner Patentanwälte mbB
(86) International application number: PCT/JP2015/074225
(87) International publication number: WO 2017/033328

(56) References cited:
- WO-A1-2015/019466
- WO-A1-2015/019466
- JP-A- 2006 062 427
- JP-A- 2007 236 196
- JP-A- H05 338 481
- JP-A- H05 338 481
- JP-A- S59 137 223
- JP-A- S60 245 408
- US-A1- 2016 161 935

## Description

### Field

The present invention relates to a station building auxiliary power unit according to claim 1 for supplying electrical power to electrical equipment in a station building.

### Background

In a recent railroad system, an electric railway vehicle (hereinafter referred to simply as electric vehicle) having a regenerative brake is popular. However, if there are only a small number of, or no, other electric vehicles operating as a load that consumes regenerative power fed back to an alternating current (AC) distribution line from the electric vehicles, excess regenerative power is returned to the electric power company via an electric power substation (hereinafter referred to simply as substation), thereby preventing effective utilization of the regenerative power. In addition, a direct current (DC) distribution line may result in regeneration cancellation, thereby possibly preventing use of a regenerative brake.

To address the problem described above, Patent Literature 1 discloses a system that charges an electrical power storage apparatus using regenerative power when there are no electric vehicles that consume the regenerative power. When the distribution line voltage, equal to the feeder voltage, reaches or exceeds a charge start voltage, this system converts the regenerative power into DC power to charge the electrical power storage apparatus, while when the distribution line voltage reaches or fall below the discharge start voltage, this system discharges electrical power stored in the electrical power storage apparatus to the distribution line. In this relation, if the charge start voltage is fixed, when the distribution line voltage increases and reaches the charge start voltage during no-load hours, such as in an early morning or late at night, the electrical power storage apparatus may be charged with electrical power supplied from a substation, rather than with regenerative power from an electric vehicle, thus causing cross current. To avoid occurrence of cross current, the system of Patent Literature 1 monitors the distribution line voltage for a certain time period to calculate an average voltage, and sets the charge start voltage to a voltage value that is several volts higher than the average voltage of the distribution line voltage.

In addition, to address the problem described above, Patent Literature 2 discloses a system that utilizes a phenomenon that an output voltage of a rectifier installed in a substation has a ripple component, which is a frequency component, while, in contrast, a regenerative voltage of an electric vehicle has no ripple components, to estimate the no-load voltage on the basis of a determination that a distribution line voltage without ripple components is identical to the ripple peak voltage, and thus periodically resets the regeneration start voltage on the basis of the estimated no-load voltage.

WO 2015/019466 A1 is directed at a station building auxiliary power supply device that generates electric power to be supplied to a load in a station building by converting electric power that is supplied from an overhead wire when the voltage of the overhead wire is higher than a predetermined threshold value, and is equipped with: a first average calculation section that calculates an average value of the overhead wire voltage at fixed time intervals; a second average calculation section that calculates an average value of overhead wire voltages that are higher than the first average value, that is, the aforementioned average value, among multiple overhead wire voltages that are detected during the fixed period of time; a third average calculation section that calculates an average value of the overhead wire voltage per day; and a comparator that selects either one of the second average value, that is, the average value calculated by the second average calculation section, and the third average value, that is, the average value calculated by the third average calculation section, and compares the selected average value with the threshold value.

JP H05 338481 A is directed at an energy storage device which is reversibly set for storing and releasing electric power energy and arranged on the primary side of a Scott connection transformer. The direction and magnitude of a tidal current of the primary side three-phase electric power are detected. On detecting the reverse current to the upstream of the primary side three-phase electric power based on the regenerative energy generated on the load side, the storage device 6a is set for storing to store the regenerative energy, and on detecting increase in feeding to the downstream of the primary side three-phase electric power based on the increase of load, the storage device 6a is set for releasing so as to supply the storage energy to the primary side.

JP 2006 062427 A is directed at a power converter that converts a DC power into an AC power and regenerates the power to a station load connected with the same AC line when the feeder cable voltage rises, and further senses the power consumed in the station load and makes the regenerated AC power equal to or below the sensed value of the station load power so as to stabilize the feeder cable voltage. Also a control takes place such that the regenerated AC power is made smaller than the power consumed by the station load, and thereby a counterflow to the AC line in connection is precluded.

### Citation List

### Patent Literature

Patent Literature 1: Japanese Patent Application Laid-open No. 2006-168390
Patent Literature 2: Japanese Patent Application Laid-open No. 2014-129001

### Summary

### Technical Problem

However, even when regenerative power is being exchanged among electric vehicles, and thus the distribution line voltage is low, such as during rush hours, the technology of Patent Literature 1 may possibly cause the regenerative power being exchanged to be stored in an electrical power storage apparatus, or be consumed by a load installed in a station building. It is desirable that during a situation in which regenerative power is being exchanged among electric vehicles, the regenerative power be not stored in an electrical power storage apparatus, or be not consumed by a load installed in a station building. In addition, since the technology of Patent Literature 2 utilizes a ripple component generated by a rectifier installed in a substation, such technology is not applicable to an AC distribution line system.

The present invention has been made in view of the foregoing, and an object of the present invention is therefore to provide a station building auxiliary power unit capable of efficiently utilizing regenerative power in an AC distribution line system.

### Solution to Problem

To solve the problem and to achieve the object described above, a station building auxiliary power unit according to independent claim 1 is provided. Preferred embodiments are recited in dependent claims 2 to 4.

### Advantageous Effects of Invention

The present invention provides an advantage in that regenerative power can be efficiently used in an AC distribution line system.

### Brief Description of Drawings

FIG. 1 is a diagram illustrating an example configuration of a railroad system including a station building auxiliary power unit according to a first embodiment.
FIG. 2 is a diagram illustrating an example configuration of a control device according to the first embodiment.
FIG. 3 is a diagram illustrating an example configuration of a control device according to the first embodiment.
FIG. 4 is a flowchart illustrating an AC power transformation operation in the station building auxiliary power unit according to the first embodiment.
FIG. 5 is a flowchart illustrating an operation of a power flow detector according to the first embodiment.
FIG. 6 is a flowchart illustrating an operation of an interface unit of the control device according to the first embodiment.
FIG. 7 is a flowchart illustrating an operation of a start-of-operation determination unit of the control device according to the first embodiment.
FIG. 8 is a flowchart illustrating an operation of a voltage instruction value calculator of the control device according to the first embodiment.
FIG. 9 is a flowchart illustrating an operation of a PWM signal generator of the control device according to the first embodiment.
FIG. 10 is a diagram illustrating an example of hardware configuration of the control device of the station building auxiliary power unit according to the first embodiment.
FIG. 11 is a diagram illustrating another example of hardware configuration of the control device of the station building auxiliary power unit according to the first embodiment.
FIG. 12 is a diagram illustrating an example configuration of a railroad system including a station building auxiliary power unit according to a second embodiment.
FIG. 13 is a diagram illustrating an example configuration of a power flow detection device and a control device according to the second embodiment.
FIG. 14 is a diagram illustrating an example configuration of the control device according to the second embodiment.

### Description of Embodiments

A station building auxiliary power unit according to each of the embodiments of the present invention will be described in detail with reference to the drawings. However, the present invention is not limited to these embodiments.

### First embodiment.

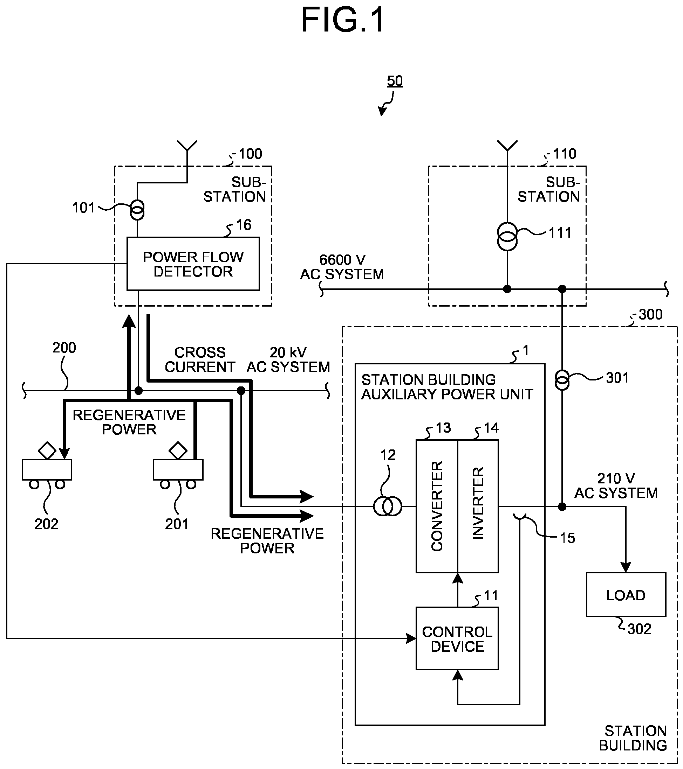

FIG. 1 is a diagram illustrating an example configuration of a railroad system 50 including a station building auxiliary power unit 1 according to a first embodiment of the present invention. The railroad system 50 includes electric vehicles 201 and 202, an AC distribution line 200 that supplies AC power to the electric vehicles 201 and 202, a substation 100 that supplies AC power to the AC distribution line 200, a station building 300 including the station building auxiliary power unit 1, and a substation 110 that supplies AC power to the station building 300. The railroad system 50 is a railroad system having an AC distribution line system.

The electric vehicle 201 is an electric vehicle having a regenerative brake. The electric vehicle 201 travels by using, for example, 20 kV AC (Alternating Current) power supplied from the substation 100 through the AC distribution line 200. In addition, if regenerative power is generated using the regenerative brake, the electric vehicle 201 outputs the generated regenerative power to the AC distribution line 200. The electric vehicle 202 is configured similarly to the electric vehicle 201.

The AC distribution line 200 is connected to the substation 100, and thus supplies the 20 kV AC power supplied from the substation 100 to the electric vehicles 201 and 202 and the like. In addition, the AC distribution line 200 supplies the regenerative power generated by the electric vehicles 201 and 202 to other electric vehicles, the station building 300, the substation 100, and the like. FIG. 1 illustrates an example in which the AC distribution line 200 supplies the regenerative power generated by the electric vehicle 201 to the electric vehicle 202, to the station building 300, and to the substation 100. Note that the AC distribution line 200 can also supply the regenerative power generated by the electric vehicle 202 to the electric vehicle 201, to the station building 300, and to the substation 100. FIG. 1 illustrates the AC power on the AC distribution line 200 as 20 kV AC, but this is merely an example, and this AC power may also be other AC power such as 25 kV AC.

The substation 100 includes a transformer 101 and a power flow detector 16. The transformer 101 transforms the voltage of the AC power supplied from a power generation plant or from a superior substation into, in the example of FIG. 1, 20 kV AC, and supplies the 20 kV AC power, obtained by the transformation, to the AC distribution line 200. Note that if the regenerative power generated by the electric vehicles 201 and 202 is output to the AC distribution line 200, AC power by the regenerative power may flow into the substation 100 from the AC distribution line 200.

The power flow detector 16 detects a power flow direction of power in the substation 100, that is, the direction in which the AC power is flowing between the AC distribution line 200 and the substation 100. The power flow direction represents the direction in which the AC power is flowing between the AC distribution line 200 and the substation 100. As used herein, the flow direction of the AC power when the AC power obtained by the transformation of the transformer 101 is supplied to the AC distribution line 200 is designated as forward direction, while the flow direction of the AC power when the regenerative power is flowing from the AC distribution line 200 to the substation 100 is designated as backward direction. The power flow detector 16 outputs information on the power flow direction of the detected power, to the station building auxiliary power unit 1 included in the station building 300. For example, in a case where the power flow detector 16 is an electric power meter, the power flow detector 16 outputs a measured power value to the station building auxiliary power unit 1 as a positive value when the AC power is flowing in the forward direction, in which AC power is supplied from the substation 100 to the AC distribution line 200, and outputs a measured power value to the station building auxiliary power unit 1 as a negative value when the AC power is flowing in the backward direction, in which regenerative power is transmitted from the AC distribution line 200 to the substation 100.

Although the power flow detector 16 has been described as being configured using an electric power meter, this configuration is merely an example, and is not limited thereto. For example, the power flow detector 16 may be constituted by a voltage sensor and a current sensor, and may thus output information on a voltage value measured by the voltage sensor and on a current value measured by the current sensor to the station building auxiliary power unit 1. In this case, the station building auxiliary power unit 1 can obtain information on the power value by computation, in an interface unit 20 or in a start-of-operation determination unit 21 of a control device 11 described below, using the voltage value measured by the voltage sensor and the current value measured by the current sensor. The description below assumes that the power flow detector 16 is an electric power meter. It is understood that although FIG. 1 illustrates the power flow detector 16 as being installed in the substation 100, this configuration is merely an example, and the power flow detector 16 may be provided outside the substation 100 as far as it is provided between the transformer 101 of the substation 100 and the AC distribution line 200.

The substation 110 includes a transformer 111. The transformer 111 transforms the voltage of the AC power supplied from a power generation plant or from a superior substation into, in the example of FIG. 1, 6600 V AC, and supplies the 6600 V AC power obtained by the transformation to the station building 300.

The station building 300 includes a transformer 301, a load 302, and the station building auxiliary power unit 1. The transformer 301 transforms the 6600 V AC power generated by the substation 110 into, for example, 210 V AC power. The transformer 301 supplies the 210 V AC power obtained by the transformation to the load 302. The load 302 is electrical equipment installed in the station building 300, such as a lighting system, an air conditioner, a display apparatus, an elevator, and an escalator. As will be described later, the load 302 can receive 210 V AC power supplied from the station building auxiliary power unit 1, but under a normal condition, the load 302 uses the 210 V AC power supplied from the transformer 301.

The station building auxiliary power unit 1 is configured to be capable of transforming the 20 kV AC power supplied from the AC distribution line 200 to generate 210 V AC power usable by the load 302 of the station building 300. However, the station building auxiliary power unit 1 does not constantly perform an AC power transformation operation, but determines whether the regenerative power generated by the electric vehicles in the railroad system 50 can be completely consumed by the electric vehicles, and performs a transformation operation in a case the regenerative power cannot be completely consumed. In other words, the station building auxiliary power unit 1 performs a transformation operation if the amount of the electric power, generated by the electric vehicles which are decelerating using the regenerative brake, is greater than the amount of the electric power consumed by other powerrunning electric vehicles. In the railroad system 50, it is possible to avoid the cross current illustrated in FIG. 1, namely, consumption of the 20 kV AC power supplied from the substation 100 in the station building 300.

The station building auxiliary power unit 1 includes a control device 11, a transformer 12, a converter 13, an inverter 14, and a voltage detector 15.

The control device 11 receives the regenerative power generated by the electric vehicles in operation, namely the electric vehicles 201 and 202 in the example of FIG. 1, through the AC distribution line 200, and determines whether the regenerative power needs to be transformed into power for supplying to the load 302, on the basis of information on the power flow direction received from the power flow detector 16 in the substation 100. If it is determined that transformation is needed, the control device 11 causes the transformer 12 to transform the voltage of the 20 kV AC power supplied from the AC distribution line 200, and controls operations of the converter 13 and of the inverter 14 using the information on the voltage value of the AC power on the load 302 side detected by the voltage detector 15, to perform the AC power transformation operation.

The transformer 12 transforms the voltage of the 20 kV AC power supplied from the AC distribution line 200 into AC power to a voltage that can be processed by the converter 13.

The converter 13 and the inverter 14 include switching elements and transform the 20 kV AC power on the AC distribution line 200 side to the 210 V AC power as a supply power to the load 302 by opening and closing each of the switching elements according to a pulse width modulation (PWM) signal that is a control signal input from the control device 11. The converter 13 may be configured using a diode instead of using a switching element. The converter 13 and the inverter 14 may collectively be referred to as power converter circuit.

The voltage detector 15 detects a voltage value of an output voltage from the inverter 14, the voltage value being the voltage value of the AC power on the load 302 side. In FIG. 1, although the power flow detector 16 is disposed in the substation 100, the information on the power flow direction of the electric power, output from the power flow detector 16, is information needed by the station building auxiliary power unit 1, not by the substation 100. Accordingly, although the power flow detector 16 is disposed in the substation 100, the power flow detector 16 may be interpreted as being included in the station building auxiliary power unit 1 despite the distant installation location thereof.

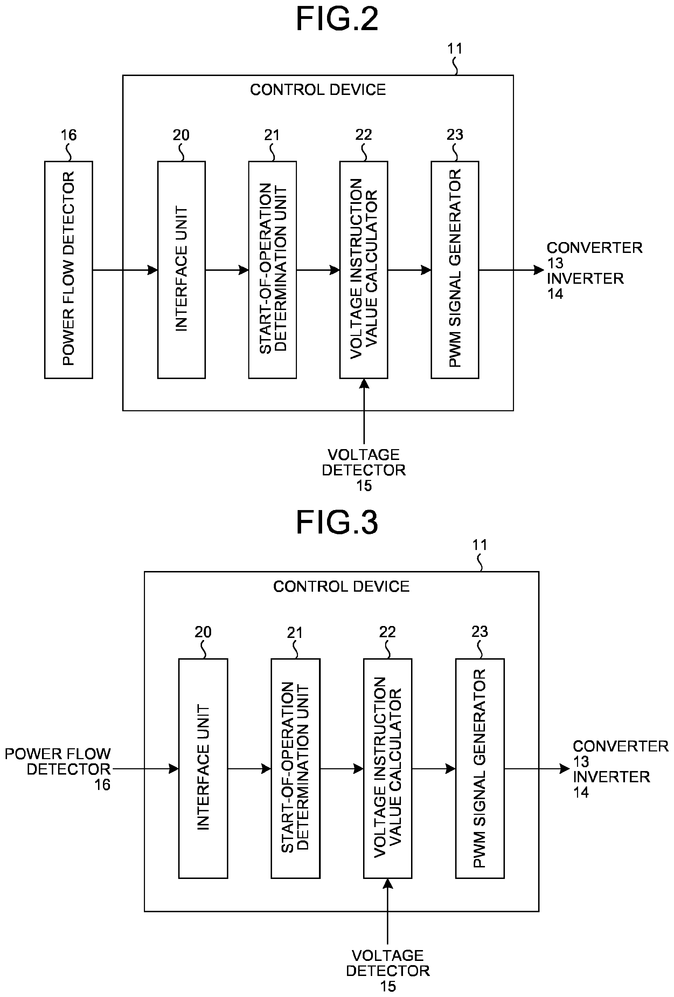

The detailed configuration of the control device 11 will next be described. FIGS. 2 and 3 are diagrams each illustrating an example configuration of the control device 11 according to the first embodiment. FIG. 2 illustrates a configuration of the station building auxiliary power unit 1 including the power flow detector 16 in the first embodiment, while FIG. 3 illustrates a configuration of the station building auxiliary power unit 1 without the power flow detector 16 in the first embodiment. The control device 11 includes an interface unit 20, a start-of-operation determination unit 21, a voltage instruction value calculator 22, and a PWM signal generator 23.

The interface unit 20 is a signal converter that converts the information on the power flow direction of the power, input from the power flow detector 16, into a first signal that can be processed by the start-of-operation determination unit 21 provided downstream thereof. For example, if the power flow detector 16 is an electric power meter, the interface unit 20 performs analog-to-digital (AD) conversion on the power value, which is information representing the power flow direction of the power, input from the power flow detector 16. The interface unit 20 converts the power value in a form of an analog signal input from the power flow detector 16 into a first signal, which is a power value signal, in a form of a digital signal that can be processed by the start-of-operation determination unit 21 provided downstream thereof. Specifically, the interface unit 20 performs AD conversion on the power flow direction information input from the power flow detector 16, in a case the power flow detector 16 is an electric power meter, on the power value measured by the electric power meter to obtain a digital signal representing a voltage ranging from -10V to +10V which can be processed by the start-of-operation determination unit 21 provided downstream thereof. Alternatively, if the power flow detector 16 is an electric power meter, the interface unit 20 performs AD conversion on the power value measured by the electric power meter to obtain a digital signal constituted by "0" and "1" that can be processed by the start-of-operation determination unit 21 provided downstream thereof.

The start-of-operation determination unit 21 determines whether the 20 kV AC power of the AC distribution line 200, the 20 kV AC power being also referred to as first AC power is to be transformed into the 210 V AC power usable by the load 302, the 210 V AC power being also referred to as second AC power, on the basis of the first signal, the first signal being the digital signal obtained by the conversion in the interface unit 20 and representing the power flow direction information.

For example, if the power flow detector 16 is an electric power meter, and the first signal input represents a negative value, which indicates a backward direction, the start-of-operation determination unit 21 determines that the AC power is flowing in a direction from the AC distribution line 200 to the substation 100, that is, in a backward direction. In this case, the start-of-operation determination unit 21 determines that the regenerative power generated by the electric vehicle is not completely consumed by the other electric vehicle, and thus flows into the substation 100, and accordingly, determines that the AC power on the AC distribution line 200 side is to be transformed into the AC power on the load 302 side to allow the regenerative power on the AC distribution line 200 generated by the electric vehicle to be consumed in the load 302 of the station building 300.

Otherwise, for example, if the power flow detector 16 is an electric power meter, and the first signal input represents a positive value, which indicates a forward direction, the start-of-operation determination unit 21 determines that the AC power is flowing in a direction from the substation 100 to the AC distribution line 200, that is, in a forward direction. In this case, the start-of-operation determination unit 21 determines that the regenerative power generated by the electric vehicle 201 is completely consumed by the electric vehicle 202, and accordingly, determines that the AC power on the AC distribution line 200 side is not to be transformed into the AC power on the load 302 side.

Upon determination that the AC power on the AC distribution line 200 side is to be transformed into the AC power on the load 302 side, the start-of-operation determination unit 21 generates, for example, a signal having a value "1" as a second signal indicating that the AC power on the AC distribution line 200 side is to be transformed into the AC power on the load 302 side, and outputs the second signal to the voltage instruction value calculator 22 provided downstream thereof. Otherwise, upon determination that the AC power on the AC distribution line 200 side is not to be transformed into the AC power on the load 302 side, the start-of-operation determination unit 21 generates, for example, a signal having a value "0," and outputs the generated signal to the voltage instruction value calculator 22 provided downstream thereof. It should be understood that signals having values "1" and "0" are provided merely by way of example, and a signal pattern other than "1" and "0" may also be used as far as the result of the determination by the start-of-operation determination unit 21 can be distinguished by the voltage instruction value calculator 22 provided downstream thereof.

Alternatively, the start-of-operation determination unit 21 may be configured such that, upon determination that the AC power on the AC distribution line 200 side is to be transformed into the AC power on the load 302 side, the start-of-operation determination unit 21 generates a second signal indicating that the AC power on the AC distribution line 200 side is to be transformed into the AC power on the load 302 side, and outputs the second signal to the voltage instruction value calculator 22 provided downstream thereof, while upon determination that the AC power on the AC distribution line 200 side is not to be transformed into the AC power on the load 302 side, the start-of-operation determination unit 21 does not have to output a second signal to the voltage instruction value calculator 22 provided downstream thereof. Upon reception of a second signal from the start-of-operation determination unit 21, the voltage instruction value calculator 22 adds a preset power value to be consumed in the station building auxiliary power unit 1 to the voltage value of the 210 V AC power on the load 302 side detected by the voltage detector 15 to calculate a voltage instruction value, which is a voltage value to be set on the PWM signal generator 23. The voltage instruction value calculator 22 outputs the voltage instruction value calculated to the PWM signal generator 23.

The PWM signal generator 23 is a control signal generator that generates a PWM signal functioning as a control signal for controlling the operation of the converter 13, and a PWM signal functioning as a control signal for controlling the operation of the inverter 14, on the basis of the voltage instruction value input from the voltage instruction value calculator 22. For example, if the converter 13 has a two-phase configuration having upper and lower arm switching elements, the PWM signal generator 23 generates four PWM signals, which are CGU, CGV, CGX, and CGY, for controlling the operation of four switching elements for the two phases. In addition, for example, if the inverter 14 has a three-phase configuration having upper and lower arm switching elements, the PWM signal generator 23 generates six PWM signals, which are IGU, IGV, IGW, IGX, IGY, and IGZ, for controlling the operation of six switching elements for the three phases. The PWM signal generator 23 outputs the four generated PWM signals CGU, CGV, CGX, and CGY for the converter 13 to the converter 13, and outputs the six generated PWM signals IGU, IGV, IGW, IGX, IGY, and IGZ for the inverter 14 to the inverter 14. If the converter 13 does not use switching elements, but includes diodes as described above, the PWM signal generator 23 generates and outputs only the PWM signals for the inverter 14, and does not generate the PWM signals for the converter 13.

In the control device 11, if the second signal indicating that the 20 kV AC power on the AC distribution line 200 side is to be transformed into the 210 V AC power on the load 302 side is not received from the start-of-operation determination unit 21, the voltage instruction value calculator 22 calculates a voltage instruction value equal to the voltage detected by the voltage detector 15, and outputs this value to the PWM signal generator 23. Thus, the voltage instruction value calculator 22 calculates the voltage instruction value dependent on the second signal.

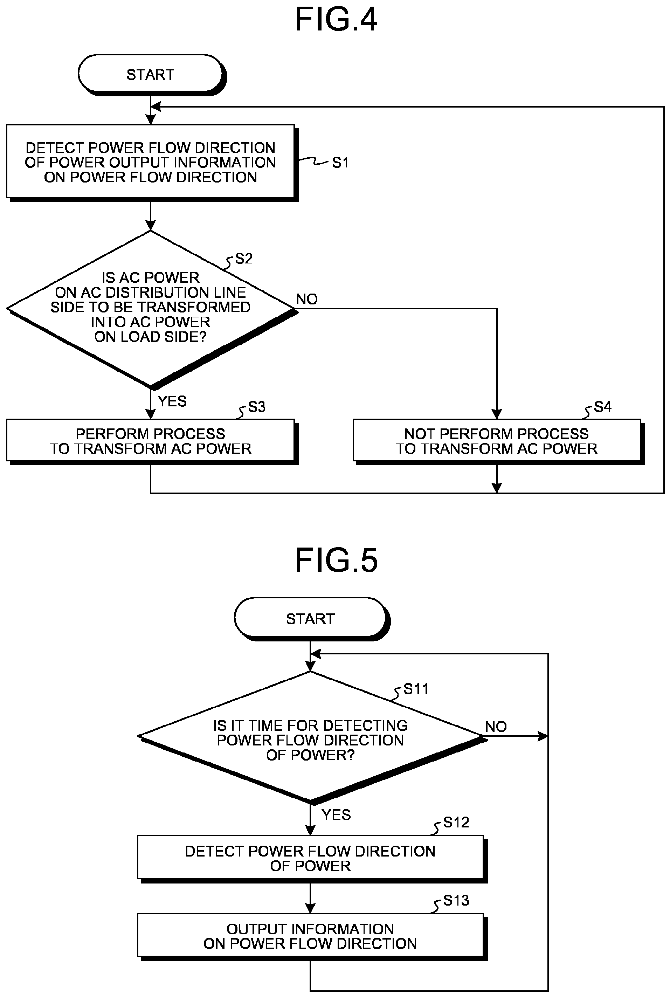

Next, the process performed in the station building auxiliary power unit 1 to transform the AC power on the AC distribution line 200 side into the AC power on the load 302 side will be described. FIG. 4 is a flowchart illustrating an AC power transformation operation in the station building auxiliary power unit 1 according to the first embodiment. The process performed by the station building auxiliary power unit 1 will be described when the regenerative power is generated by the electric vehicle 201 as illustrated in FIG. 1.

First, the power flow detector 16 detects the power flow direction of the power between the substation 100 and the AC distribution line 200, and outputs information on the power flow direction to the control device 11 (step S1). A detailed operation of the power flow detector 16 at step S1 of FIG. 4 will now be described. FIG. 5 is a flowchart illustrating an operation of the power flow detector 16 according to the first embodiment. The power flow detector 16 detects periodically, for example every 20 ms, the power flow direction of the power between the substation 100 and the AC distribution line 200; and thus waits for the time for detecting the power flow direction of the power (step S11: No). When the timing for detecting the power flow direction of the power comes (step S11: Yes), the power flow detector 16 detects the power flow direction of the power (step S12). The power flow detector 16 outputs information on the power flow direction to the control device 11 (step S13). It should be understood that the detection by the power flow detector 16 of the power flow direction of the power between the substation 100 and the AC distribution line 200 every 20 ms is merely an example, and the detection interval is not limited to 20 ms.

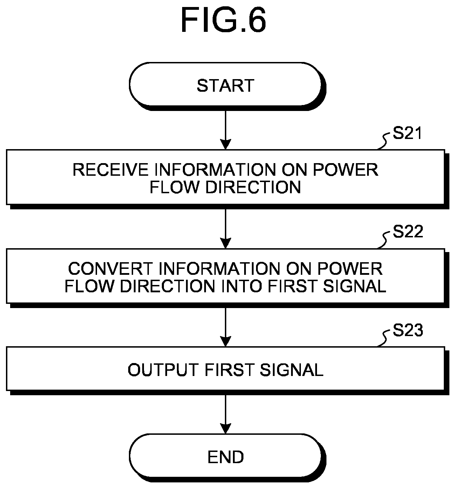

Returning to the flowchart of FIG. 4, upon reception of the information on the power flow direction from the power flow detector 16, the control device 11 determines whether the AC power on the AC distribution line 200 side is to be transformed into the AC power on the load 302 side (step S2). A detailed operation of the control device 11 at step S2 of FIG. 4 will now be described. FIG. 6 is a flowchart illustrating an operation of the interface unit 20 of the control device 11 according to the first embodiment. Upon reception of the information on the power flow direction from the power flow detector 16 (step S21), the interface unit 20 converts the information on the power flow direction into the first signal, which is a signal that can be processed by the start-of-operation determination unit 21 provided downstream thereof (step S22). The interface unit 20 outputs the first signal obtained by the conversion to the start-of-operation determination unit 21 (step S23).

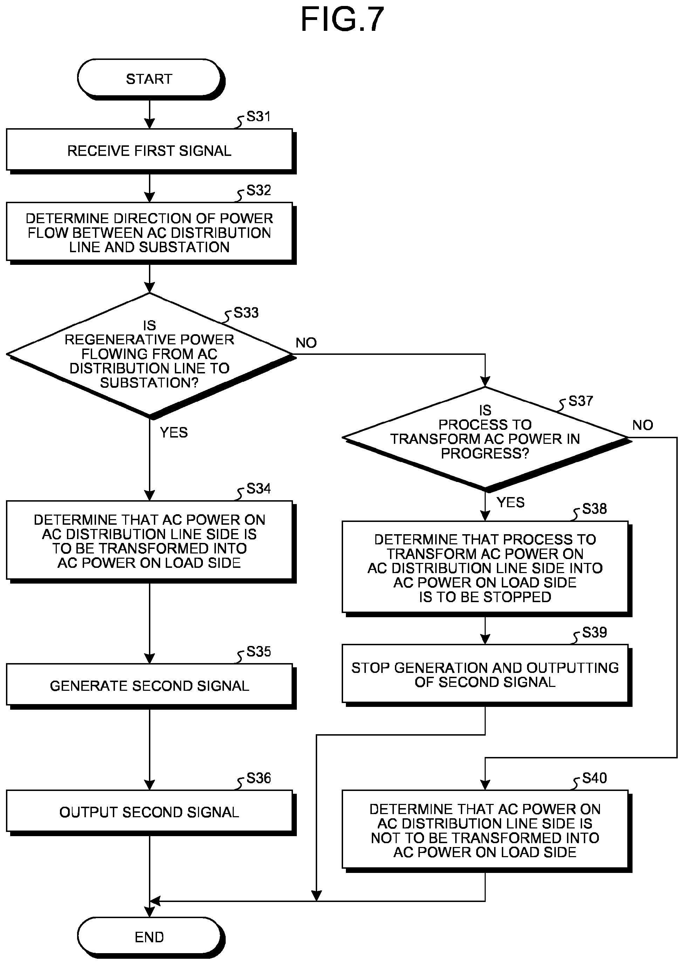

FIG. 7 is a flowchart illustrating an operation of the start-of-operation determination unit 21 of the control device 11 according to the first embodiment. Upon reception of the first signal, which is the digital signal obtained by AD conversion and representing the power flow direction information (step S31), from the interface unit 20, the start-of-operation determination unit 21 determines, on the basis of the first signal, the direction of the power flow between the AC distribution line 200 and the substation 100 (step S32). For example, if the power flow detector 16 is an electric power meter, and the first signal obtained by the conversion of the information on the power flow direction represents a positive value, which means that the power is flowing in a forward direction, namely, in the example of FIG. 1, the regenerative power generated by the electric vehicle 201 is completely consumed by the other electric vehicle 202, the start-of-operation determination unit 21 thus determines that AC power is supplied from the substation 100 to the AC distribution line 200 (step S33: No). Otherwise, for example, if the power flow detector 16 is an electric power meter, and the first signal obtained by the conversion of the information on the power flow direction represents a negative value, which means that the power is flowing in a backward direction, namely in the example of FIG. 1, the regenerative power generated by the electric vehicle 201 is not completely consumed by the other electric vehicle 202, the start-of-operation determination unit 21 thus determines that the regenerative power is flowing from the AC distribution line 200 to the substation 100 (step S33: Yes).

If it is determined that the regenerative power is flowing from the AC distribution line 200 to the substation 100 (step S33: Yes), the start-of-operation determination unit 21 determines that the AC power on the AC distribution line 200 side is to be transformed into the AC power on the load 302 side (step S34). The start-of-operation determination unit 21 generates a second signal indicating that the AC power is to be transformed (step S35), and outputs the generated second signal to the voltage instruction value calculator 22 (step S36).

If it is determined that AC power is supplied from the substation 100 to the AC distribution line 200 (step S33: No), the start-of-operation determination unit 21 then checks whether a process is in progress to transform the AC power on the AC distribution line 200 side into the AC power on the load 302 side (step S37). If a process is in progress to transform the AC power on the AC distribution line 200 side into the AC power on the load 302 side (step S37: Yes), the start-of-operation determination unit 21 determines that the process to transform the AC power on the AC distribution line 200 side into the AC power on the load 302 side is to be stopped (step S38). If a process is in progress to transform the AC power on the AC distribution line 200 side into the AC power on the load 302 side, the start-of-operation determination unit 21 stops generation and outputting of the second signal (step S39). If a process is not in progress to transform the AC power on the AC distribution line 200 side into the AC power on the load 302 side (step S37: No), the start-of-operation determination unit 21 determines that the AC power on the AC distribution line 200 side is not to be transformed into the AC power on the load 302 side (step S40). In this case, the start-of-operation determination unit 21 does not generate a second signal.

Returning to the flowchart of FIG. 4, if it is determined that the AC power on the AC distribution line 200 side is to be transformed into AC power on the load 302 side (step S2: Yes), the control device 11 performs a process to transform the AC power on the AC distribution line 200 side into the AC power on the load 302 side (step S3), and the process returns to step S1. Otherwise, if it is determined that the AC power on the AC distribution line 200 side is not to be transformed into the AC power on the load 302 side (step S2: No), the control device 11 does not perform a process to transform the AC power on the AC distribution line 200 side into the AC power on the load 302 side (step S4), and the process returns to step S1. Specifically, in the operation of the start-of-operation determination unit 21 illustrated in FIG. 7, the "Yes" branch at step S33 corresponds to the "Yes" branch at step S2 illustrated in FIG. 4, and the "No" branch at step S33 corresponds to the "No" branch at step S2 illustrated in FIG. 4.

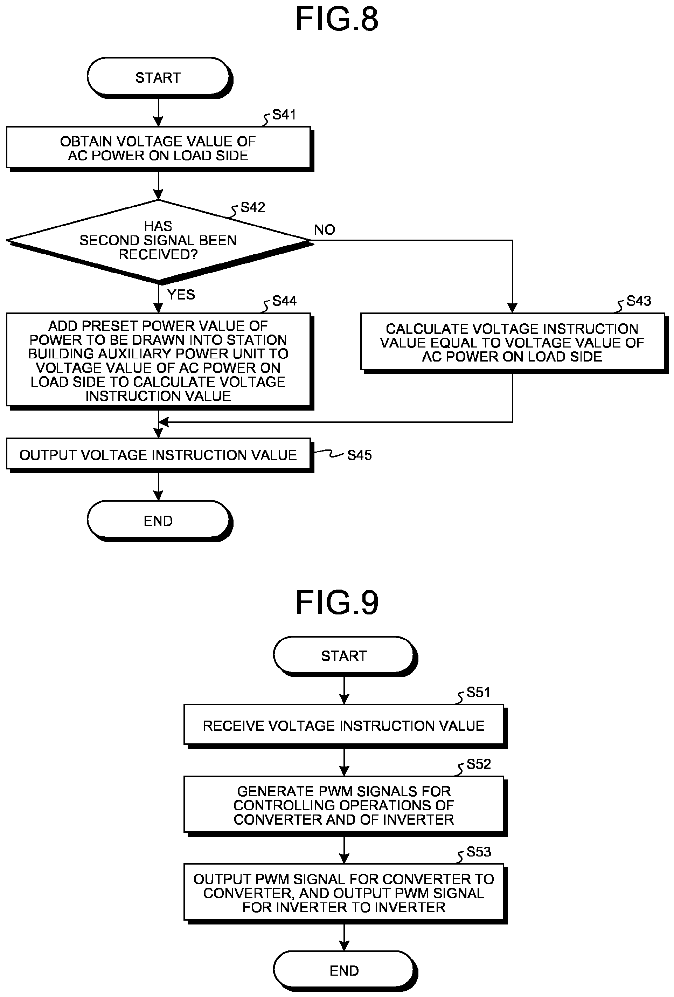

A detailed operation of the control device 11 at step S3 of FIG. 4 will now be described. FIG. 8 is a flowchart illustrating an operation of the voltage instruction value calculator 22 of the control device 11 according to the first embodiment. The voltage instruction value calculator 22 obtains, from the voltage detector 15, information on the voltage value of the AC power on the load 302 side (step S41). If the second signal is not received from the start-of-operation determination unit 21 (step S42: No), the voltage instruction value calculator 22 calculates a voltage instruction value equal to the voltage value of the AC power on the load 302 side, obtained from the voltage detector 15 (step S43). If the second signal is received from the start-of-operation determination unit 21 (step S42: Yes), the voltage instruction value calculator 22 adds a preset power value to be consumed in the station building auxiliary power unit 1 to the voltage value of the AC power on the load 302 side obtained from the voltage detector 15 to calculate a voltage instruction value for the PWM signal generator 23 (step S44). After the calculation of the voltage instruction value at step S43 or step S44, the voltage instruction value calculator 22 outputs the voltage instruction value calculated to the PWM signal generator 23 (step S45).

FIG. 9 is a flowchart illustrating an operation of the PWM signal generator 23 of the control device 11 according to the first embodiment. Upon reception of the voltage instruction value from the voltage instruction value calculator 22 (step S51), the PWM signal generator 23 generates a PWM signal for controlling the operation of the converter 13, and a PWM signal for controlling the operation of the inverter 14, on the basis of the voltage instruction value (step S52). Then, the PWM signal generator 23 outputs the generated PWM signal for the converter 13 to the converter 13, and outputs the generated PWM signal for the inverter 14 to the inverter 14 (step S53). On the basis of the operation described above, if AC power is flowing from the AC distribution line 200 to the substation 100, that is, if the regenerative power generated by the electric vehicle is flowing from the AC distribution line 200 to the substation 100, the station building auxiliary power unit 1 transforms the 20 kV AC power on the AC distribution line 200 side into the 210 V AC power on the load 302 side to allow the regenerative power generated by the electric vehicle to be consumed in the load 302 of the station building 300.

If AC power is flowing from the substation 100 to the AC distribution line 200, that is, if the regenerative power generated by the electric vehicles is not flowing from the AC distribution line 200 to the substation 100, the station building auxiliary power unit 1 does not perform a process to transform the 20 kV AC power on the AC distribution line 200 side into the 210 V AC power on the load 302 side.

Moreover, if the direction of the flow of the AC power between the AC distribution line 200 and the substation 100 changes to a direction from the substation 100 to the AC distribution line 200 during a process to transform the 20 kV AC power on the AC distribution line 200 side into the 210 V AC power on the load 302 side, the station building auxiliary power unit 1 stops the process to transform the 20 kV AC power on the AC distribution line 200 side into the 210 V AC power on the load 302 side.

A configuration of the station building auxiliary power unit 1 will next be described. In the station building auxiliary power unit 1, the transformer 12 is realized by a transformer circuit, the converter 13 is realized by an AC-to-DC converter circuit, the inverter 14 is realized by a DC-to-AC converter circuit, and the voltage detector 15 is realized by a voltmeter. If the power flow detector 16 is included in the station building auxiliary power unit 1, the power flow detector 16 is realized by, for example, an electric power meter. The description below will be given in terms of the configuration of the control device 11 included in the station building auxiliary power unit 1.

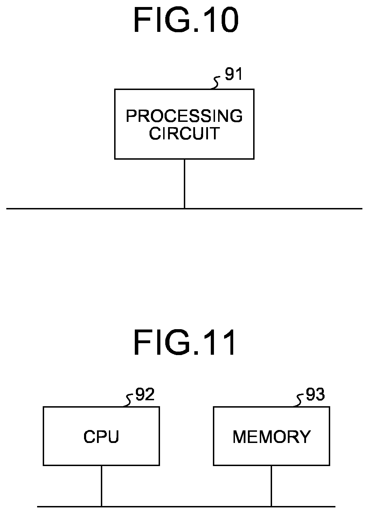

FIGS. 10 and 11 are each a diagram illustrating an example of hardware configuration of the control device 11 of the station building auxiliary power unit 1 according to the first embodiment. The functions of the interface unit 20, the start-of-operation determination unit 21, the voltage instruction value calculator 22, and the PWM signal generator 23 of the control device 11 of the station building auxiliary power unit 1 are realized by a processing circuit 91. In other words, the control device 11 of the station building auxiliary power unit 1 includes a processing unit for: converting information on the power flow direction into a first signal; determining whether the AC power on the AC distribution line 200 side is to be transformed into the AC power on the load 302 side; calculating a voltage instruction value; and generating PWM signals for respectively controlling the operations of the converter 13 and of the inverter 14. The processing circuit 91 may be dedicated hardware, or may be a combination of a central processing unit (CPU) 92 and a memory 93, where the CPU 92 executes a program stored in the memory 93. The CPU 92 may be a central processing unit, a processing unit, a computing unit, a microprocessor, a microcomputer, a processor, a digital signal processor (DSP), and the like.

If the processing circuit 91 is dedicated hardware, examples of the processing circuit 91 include a single circuit, a composite circuit, a programmed processor, a parallelprogrammed processor, an ASIC (application specific integrated circuit), an FPGA (field programmable gate array), and combinations thereof. The functions of the interface unit 20, the start-of-operation determination unit 21, the voltage instruction value calculator 22, and the PWM signal generator 23 may each be individually implemented in the processing circuit 91, or may collectively be implemented in the processing circuit 91.

If the processing circuit 91 is a combination of the CPU 92 and the memory 93, the functions of the interface unit 20, the start-of-operation determination unit 21, the voltage instruction value calculator 22, and the PWM signal generator 23 are implemented in software, firmware, or a combination of software and firmware. The software or firmware is described in the form of a program, and is stored in the memory 93. The processing circuit 91 provides the functions of these components by causing the CPU 92 to read and execute the program stored in the memory 93. That is, the control device 11 of the station building auxiliary power unit 1 includes a memory 93 for storing programs that, upon execution by the processing circuit 91, cause the processing circuit 91 to perform: a step of converting information on the power flow direction to a first signal, a step of determining whether the AC power on the AC distribution line 200 side is to be transformed into the AC power on the load 302 side, a step of calculating a voltage instruction value, and a step of generating PWM signals for respectively controlling the operations of the converter 13 and of the inverter 14, as a result. These programs can be said to cause a computer to perform the procedures and methods of the interface unit 20, the start-of-operation determination unit 21, the voltage instruction value calculator 22, and the PWM signal generator 23. In this relation, examples of the memory 93 include non-volatile and volatile semiconductor memories such as a random access memory (RAM), a readonly memory (ROM), a flash memory, an erasable programmable ROM (EPROM), and an electrically EPROM (EEPROM), a magnetic disk, a flexible disk, an optical disk, a compact disc, a mini disk, and a digital versatile disc (DVD).

The functions of the interface unit 20, the start-of-operation determination unit 21, the voltage instruction value calculator 22, and the PWM signal generator 23 may be partially implemented by dedicated hardware, and partially implemented by software or firmware. For example, it is possible that the functions of the interface unit 20 and the start-of-operation determination unit 21 be implemented by a processing circuit 91 configured as dedicated hardware, and the functions of the voltage instruction value calculator 22 and the PWM signal generator 23 be implemented by a processing circuit 91 such that the CPU 92 reads and executes programs stored in the memory 93.

As described above, the processing circuit 91 can realize the functions described above in hardware, software, firmware, or a combination thereof. Note that the configuration of the interface unit 20 is not limited to the configuration described above, and may be realized by an AD conversion circuit.

As has been described above, in the railroad system 50 having an AC distribution line system according to the first embodiment, the station building auxiliary power unit 1 determines, on the basis of information on the power flow direction of the AC power between AC distribution line 200 and the substation 100. If the AC power is flowing from the AC distribution line 200 to the substation 100, the station building auxiliary power unit 1 determines that the regenerative power generated in the electric vehicle is not completely consumed by the other electric vehicle, and is thus flowing into the substation 100, and accordingly, transforms the AC power on the AC distribution line 200 side into the AC power on the load 302 side. Otherwise, if the AC power is flowing from the substation 100 to the AC distribution line 200, the station building auxiliary power unit 1 does not transform the AC power on the AC distribution line 200 side into the AC power on the load 302 side. This configuration allows the station building auxiliary power unit 1 not to perform transformation of the AC power if the regenerative power generated by the electric vehicle is being used by the other electric vehicle, and to perform transformation of the AC power if the regenerative power generated by the electric vehicle is not completely consumed by the other electric vehicle. Thus, the regenerative power generated by the electric vehicle can be efficiently utilized in the load 302 of the station building 300.

### Second embodiment.

In the first embodiment, the control device 11 obtains information on the power flow direction from the power flow detector 16, determines whether the AC power on the AC distribution line 200 side is to be transformed into the AC power on the load 302 side, and, if it is determined that transformation is to be performed, performs a process to transform the AC power. In a second embodiment, a description will be provided below for a case in which the process is performed outside the station building up to the step of determining whether the AC power on the AC distribution line 200 side is to be transformed into the AC power on the load 302 side. The portions different from those of the first embodiment will be described below.

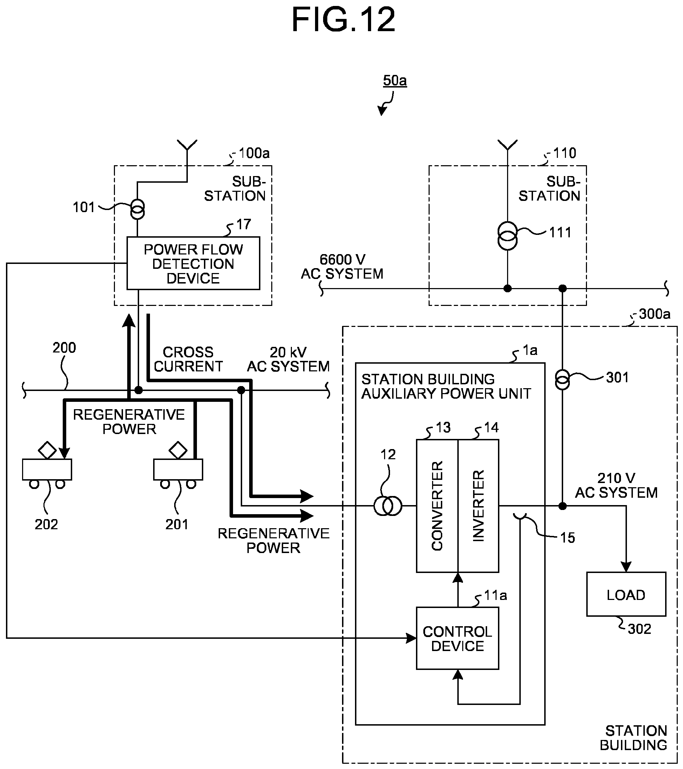

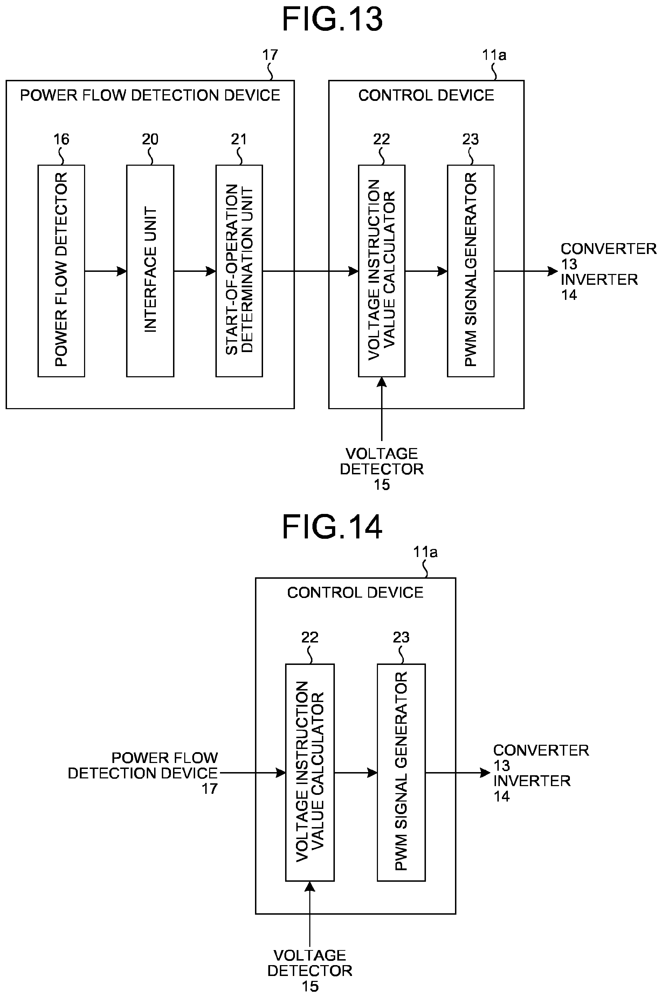

FIG. 12 is a diagram illustrating an example configuration of a railroad system 50a including a station building auxiliary power unit 1a according to the second embodiment of the present invention. The railroad system 50a includes a station building 300a and a substation 100a in place of the station building 300 and the substation 100 of the railroad system 50 of the first embodiment illustrated in FIG. 1. The substation 100a includes a power flow detection device 17 in place of the power flow detector 16 included in the substation 100 of the first embodiment illustrated in FIG. 1. FIG. 13 is a diagram illustrating an example configuration of the power flow detection device 17 and of a control device 11a according to the second embodiment. The power flow detection device 17 includes the power flow detector 16, the interface unit 20, and the start-of-operation determination unit 21. The power flow detector 16, the interface unit 20, and the start-of-operation determination unit 21 operate similarly to those of the first embodiment. The power flow detection device 17 detects a power flow direction, which represents the direction in which the power is flowing between the AC distribution line 200 electrically connecting to an electric vehicle and a substation 100a that supplies AC power to the AC distribution line 200. In addition, the power flow detection device 17 converts the information on the power flow direction into the first signal. Moreover, the power flow detection device 17 determines whether first AC power on the AC distribution line 200 side is to be transformed into second AC power usable by the load 302 on the basis of the first signal, and if it is determined that transformation is to be performed, the power flow detection device 17 generates and outputs a second signal.

Although, in FIG. 12, the power flow detection device 17 is disposed in the substation 100a, the second signal output from the power flow detection device 17 is a signal needed by the station building auxiliary power unit 1a, not by the substation 100a. Accordingly, the power flow detection device 17 may be interpreted as being included in the station building auxiliary power unit 1a despite the distant installation location thereof. FIG. 14 is a diagram illustrating an example configuration of the control device 11a according to the second embodiment. Similarly to FIGS. 2 and 3 of the first embodiment, FIG. 13 illustrates a configuration of the station building auxiliary power unit 1a including the power flow detection device 17 in the second embodiment, while FIG. 14 illustrates a configuration of the station building auxiliary power unit 1a without the power flow detection device 17 in the second embodiment. The station building 300a includes the control device 11a in place of the control device 11 included in the station building 300 of the first embodiment illustrated in FIG. 1. As illustrated in FIGS. 13 and 14, the control device 11a includes the voltage instruction value calculator 22 and the PWM signal generator 23. The voltage instruction value calculator 22 and the PWM signal generator 23 operate similarly to those of the first embodiment.

As described above, the railroad system 50 of the first embodiment and the railroad system 50a of the second embodiment differ only in that the interface unit 20 and the start-of-operation determination unit 21 have been moved from the station building to the substation.

In the station building auxiliary power unit 1a of the second embodiment, the process to transform the 20 kV AC power on the AC distribution line 200 into the 210 V AC power, as well as the processes of the components, are performed similarly to the processes illustrated in the flowcharts of FIGS. 4 to 9 described with respect to the first embodiment. Therefore, the description of the process to transform the 20 kV AC power on the AC distribution line 200 into the 210 V AC power in the station building auxiliary power unit 1a will be omitted. Note that in the second embodiment, the process at step S2 illustrated in FIG. 4 is performed, not in the station building 300a, but in the substation 100a.

In addition, the interface unit 20 and the start-of-operation determination unit 21 in the power flow detection device 17 illustrated in FIG. 13, and the voltage instruction value calculator 22 and the PWM signal generator 23 of the control device 11a illustrated in FIGS. 13 and 14 are implemented according to the example of the hardware configuration illustrated in FIGS. 10 and 11.

As has been described above, according to the second embodiment, the interface unit 20 and the start-of-operation determination unit 21 provided in the control device 11 in the first embodiment have been moved to the power flow detection device 17 of the substation 100a. Also in this case, an advantage similar to that of the first embodiment can be provided.

As described above, the present invention can be usefully applied to a station building auxiliary power unit for converting regenerative power generated by an electric vehicle into power usable by a load in a station building.

The configurations described in the disclosed embodiments are merely examples of the present invention, and can thus be combined with other known technology, or otherwise a portion of the configurations may be omitted and/or modified without departing from the present invention as defined in the appended claims.

### Reference Signs List

1,1a station building auxiliary power unit; 11,11a control device; 12,101,111,301 transformer; 13 converter; 14 inverter; 15 voltage detector; 16 power flow detector; 17 power flow detection device; 20 interface unit; 21 start-of-operation determination unit; 22 voltage instruction value calculator; 23 PWM signal generator; 50,50a railroad system; 100,100a,110 substation; 200 AC distribution line; 201,202 electric vehicle; 300,300a station building; 302 load.

## Claims

1. A station building auxiliary power unit (1) comprising:
a power converter circuit (13, 14) configured to be connected to a load (302) which is supplied with power by a first substation (110); and
a control device (11) connected to the power converter circuit (13, 14), the control device (11) including:
a start-of-operation determination unit (21) configured to determine, on the basis of a first signal that represents information on a power flow direction indicating a direction of flow of electrical power between an alternating current, AC, distribution line (200) electrically connecting to an electric railway vehicle (201, 202) and a second substation (100) for supplying AC power to the AC distribution line (200), whether a first AC power on an AC distribution line side is to be transformed into a second AC power usable by the load (302);
a voltage instruction value calculator (22) configured to calculate a voltage instruction value that corresponds to a determination by the start-of-operation determination unit; and
a control signal generator (23) configured to generate, on the basis of the voltage instruction value, a control signal for the power converter circuit (13, 14) to transform the first AC power into the second AC power, and to output the control signal to the power converter circuit (13, 14);
wherein:
if the information on the power flow direction indicates that the AC power is flowing from the AC distribution line (200) to the second substation (100), the start-of-operation determination unit (21) is configured to determine that the first AC power is to be transformed into the second AC power on the basis of the first signal, and the power converter circuit is configured to supply the second AC power to the load (302);
if the information on the power flow direction indicates that the AC power is flowing from the second substation (100) to the AC distribution line (200), the start-of-operation determination unit (21) is configured to determine that the first AC power is not to be transformed into the second AC power on the basis of the first signal, wherein
the power converter circuit (13, 14) includes a converter (13) and an inverter (14), wherein
the converter (13) is adapted to receive only the first AC power from the AC distribution line (200) side and
the inverter is adapted to output only the second AC power to the load (302),
**characterised in that**
the voltage instruction value calculator (22) is configured to calculate the voltage instruction value on the basis of a voltage value of a load side AC power, and,
wherein, if the start-of-operation determination unit (21) determines that the first AC power is not to be transformed into the second AC power, the voltage instruction value calculator (22) is configured to make the voltage value of the load side AC power as the voltage instruction value.

2. The station building auxiliary power unit (1) according to claim 1, wherein, if the information on the power flow direction indicates that the AC power is flowing from the second substation (100) to the AC distribution line (200), the start-of-operation determination unit (21) is configured to:
determine that the first AC power is not to be transformed into the second AC power on the basis of the first signal, and
if the first AC power is being transformed into the second AC power, stop transforming the first AC power into the second AC power.

3. The station building auxiliary power unit (1) according to claim 1 or 2, wherein, if the start-of-operation determination unit (21) determines that the first AC power is to be transformed into the second AC power, the start-of-operation determination unit (21) is further configured to generate and output a second signal to the voltage instruction value calculator (22), and
the voltage instruction value calculator (22) is configured, upon receiving the second signal from the start-of-operation determination unit(21), to add a preset power value to be consumed in the station building auxiliary power unit (1) to the voltage value of the load side AC power as the voltage instruction value.

4. The station building auxiliary power unit (1) according to any one of claims 1 to 3, comprising:
a power flow direction detector (16) configured to detect the power flow direction indicating the direction of flow of electrical power between the AC distribution line (200) and the second substation (100), and to output the information on the power flow direction.

## Patentansprüche

1. Eine Hilfsstromversorgungseinheit für ein Stationsgebäude (1), aufweisend:
eine Leistungswandlerschaltung (13, 14), die dazu eingerichtet ist, mit einer Last (302) verbunden zu werden, die durch ein erstes Unterwerk (110) mit Leistung versorgt wird; und
eine Steuervorrichtung (11), die mit der Leistungswandlerschaltung (13, 14) verbunden ist, wobei die Steuervorrichtung (11) aufweist:
eine Betriebsstart-Bestimmungseinheit (21), die dazu eingerichtet ist, auf der Grundlage eines ersten Signals, das Informationen über eine Leistungsflussrichtung repräsentiert, die eine Flussrichtung elektrischer Leistung zwischen einer Wechselstrom-(AC-)Verteilungsleitung (200), die elektrisch mit einem elektrischen Schienenfahrzeug (201, 202) verbunden ist, und einem zweiten Unterwerk (100), das dazu dient, die AC-Verteilungsleitung (200) mit AC-Leistung zu versorgen, angibt, zu bestimmen, ob eine erste AC-Leistung auf einer Seite der AC-Verteilungsleitung in eine zweite AC-Leistung umzuwandeln ist, die durch die Last (302) nutzbar ist;
einen Spannungsvorgabewert-Berechner (22), der dazu eingerichtet ist, einen Spannungsvorgabewert zu berechnen, der einer Bestimmung durch die Betriebsstart-Bestimmungseinheit entspricht; und
einen Steuersignalgenerator (23), der dazu eingerichtet ist, auf der Grundlage des Spannungsvorgabewerts ein Steuersignal für die Leistungswandlerschaltung (13, 14) zu erzeugen, um die erste AC-Leistung in die zweite AC-Leistung umzuwandeln, und das Steuersignal an die Leistungswandlerschaltung (13, 14) auszugeben;
wobei:
falls die Informationen über die Leistungsflussrichtung angeben, dass die AC-Leistung von der AC-Verteilungsleitung (200) zu dem zweiten Unterwerk (100) fließt, die Betriebsstart-Bestimmungseinheit (21) dazu eingerichtet ist, auf der Grundlage des ersten Signals zu bestimmen, dass die erste AC-Leistung in die zweite AC-Leistung umzuwandeln ist, und die Leistungswandlerschaltung dazu eingerichtet ist, die Last (302) mit der zweiten AC-Leistung zu versorgen;
falls die Informationen über die Leistungsflussrichtung angeben, dass die AC-Leistung von dem zweiten Unterwerk (100) zu der AC-Verteilungsleitung (200) fließt, die Betriebsstart-Bestimmungseinheit (21) dazu eingerichtet ist, auf der Grundlage des ersten Signals zu bestimmen, dass die erste AC-Leistung nicht in die zweite AC-Leistung umzuwandeln ist, wobei
die Leistungswandlerschaltung (13, 14) einen Konverter (13) und einen Wechselrichter (14) aufweist, wobei
der Konverter (13) dazu ausgelegt ist, nur die erste AC-Leistung von der Seite der AC-Verteilungsleitung (200) zu empfangen und
der Wechselrichter dazu ausgelegt ist, nur die zweite AC-Leistung an die Last (302) auszugeben,
**dadurch gekennzeichnet, dass**
der Spannungsvorgabewert-Berechner (22) dazu eingerichtet ist, den Spannungsvorgabewert auf der Grundlage eines Spannungswerts einer lastseitigen AC-Leistung zu berechnen, und,
wobei, falls die Betriebsstart-Bestimmungseinheit (21) bestimmt, dass die erste AC-Leistung nicht in die zweite AC-Leistung umzuwandeln ist, der Spannungsvorgabewert-Berechner (22) dazu eingerichtet ist, den Spannungswert der lastseitigen AC-Leistung als den Spannungsvorgabewert festzulegen.

2. Die Hilfsstromversorgungseinheit für ein Stationsgebäude (1) nach Anspruch 1, wobei, falls die Informationen über die Leistungsflussrichtung angeben, dass die AC-Leistung von dem zweiten Unterwerk (100) zu der AC-Verteilungsleitung (200) fließt, die Betriebsstart-Bestimmungseinheit (21) dazu eingerichtet ist:
zu bestimmen, auf der Grundlage des ersten Signals, dass die erste AC-Leistung nicht in die zweite AC-Leistung umzuwandeln ist, und
falls die erste AC-Leistung in die zweite AC-Leistung umgewandelt wird, die Umwandlung der ersten AC-Leistung in die zweite AC-Leistung zu stoppen.

3. Die Hilfsstromversorgungseinheit für ein Stationsgebäude (1) nach Anspruch 1 oder 2, wobei, falls die Betriebsstart-Bestimmungseinheit (21) bestimmt, dass die erste AC-Leistung in die zweite AC-Leistung umzuwandeln ist, die Betriebsstart-Bestimmungseinheit (21) ferner dazu eingerichtet ist, ein zweites Signal zu erzeugen und an den Spannungsvorgabewert-Berechner (22) auszugeben, und
der Spannungsvorgabewert-Berechner (22) dazu eingerichtet ist, beim Empfangen des zweiten Signals von der Betriebsstart-Bestimmungseinheit (21) einen voreingestellten Leistungswert, der in der Hilfsstromversorgungseinheit für ein Stationsgebäude (1) verbraucht werden soll, zu dem Spannungswert der lastseitigen AC-Leistung als den Spannungsvorgabewert zu addieren.

4. Die Hilfsstromversorgungseinheit für ein Stationsgebäude (1) nach einem der Ansprüche 1 bis 3, aufweisend:
einen Leistungsflussrichtungsdetektor (16), der dazu eingerichtet ist, die Leistungsflussrichtung zu detektieren, die die Flussrichtung elektrischer Leistung zwischen der AC-Verteilungsleitung (200) und dem zweiten Unterwerk (100) angibt, und die Informationen über die Leistungsflussrichtung auszugeben.

## Revendications

1. Une unité d'alimentation électrique auxiliaire de bâtiment de gare (1) comprenant :
un circuit de conversion de puissance (13, 14) configuré pour être connecté à une charge (302) à laquelle une première sous-station (110) fournit de la puissance ; et
un dispositif de commande (11) connecté au circuit de conversion de puissance (13, 14), le dispositif de commande (11) comprenant :
une unité de détermination de début de fonctionnement (21) configurée pour déterminer, sur la base d'un premier signal qui représente des informations sur une direction du flux de puissance indiquant une direction du flux de puissance électrique entre une ligne de distribution en courant alternatif (CA) (200) connectée électriquement à un véhicule ferroviaire électrique (201, 202) et une deuxième sous-station (100) destinée à fournir une puissance CA à la ligne de distribution CA (200), si une première puissance CA du côté de la ligne de distribution CA doit être convertie en une deuxième puissance CA utilisable par la charge (302) ;
un calculateur de valeur de consigne de tension (22) configuré pour calculer une valeur de consigne de tension correspondant à une détermination par l'unité de détermination de début de fonctionnement ; et
un générateur de signal de commande (23) configuré pour générer, sur la base de la valeur de consigne de tension, un signal de commande pour le circuit de conversion de puissance (13, 14) afin de convertir la première puissance CA en la deuxième puissance CA, et pour délivrer le signal de commande au circuit de conversion de puissance (13, 14) ;
dans laquelle :
si les informations sur la direction du flux de puissance indiquent que la puissance CA circule de la ligne de distribution CA (200) vers la deuxième sous-station (100), l'unité de détermination de début de fonctionnement (21) est configurée pour déterminer, sur la base du premier signal, que la première puissance CA doit être convertie en la deuxième puissance CA, et le circuit de conversion de puissance est configuré pour fournir la deuxième puissance CA à la charge (302) ;
si les informations sur la direction du flux de puissance indiquent que la puissance CA circule de la deuxième sous-station (100) vers la ligne de distribution CA (200), l'unité de détermination de début de fonctionnement (21) est configurée pour déterminer, sur la base du premier signal, que la première puissance CA ne doit pas être convertie en la deuxième puissance CA, dans laquelle
le circuit de conversion de puissance (13, 14) comprend un convertisseur (13) et un onduleur (14), dans lequel
le convertisseur (13) est adapté pour recevoir uniquement la première puissance CA depuis le côté de la ligne de distribution CA (200) et
l'onduleur est adapté pour délivrer uniquement la deuxième puissance CA à la charge (302),
**caractérisée en ce que**
le calculateur de valeur de consigne de tension (22) est configuré pour calculer la valeur de consigne de tension sur la base d'une valeur de tension d'une puissance CA côté charge, et,
dans laquelle, si l'unité de détermination de début de fonctionnement (21) détermine que la première puissance CA ne doit pas être convertie en la deuxième puissance CA, le calculateur de valeur de consigne de tension (22) est configuré pour définir la valeur de tension de la puissance CA côté charge comme valeur de consigne de tension.

2. L'unité d'alimentation électrique auxiliaire de bâtiment de gare (1) selon la revendication 1, dans laquelle, si les informations sur la direction du flux de puissance indiquent que la puissance CA circule de la deuxième sous-station (100) vers la ligne de distribution CA (200), l'unité de détermination de début de fonctionnement (21) est configurée pour :
déterminer, sur la base du premier signal, que la première puissance CA ne doit pas être convertie en la deuxième puissance CA, et
si la première puissance CA est en cours de conversion en la deuxième puissance CA, arrêter la conversion de la première puissance CA en la deuxième puissance CA.

3. L'unité d'alimentation électrique auxiliaire de bâtiment de gare (1) selon la revendication 1 ou 2, dans laquelle, si l'unité de détermination de début de fonctionnement (21) détermine que la première puissance CA doit être convertie en la deuxième puissance CA, l'unité de détermination de début de fonctionnement (21) est en outre configurée pour générer et délivrer un deuxième signal au calculateur de valeur de consigne de tension (22), et
le calculateur de valeur de consigne de tension (22) est configuré, lors de la réception du deuxième signal provenant de l'unité de détermination de début de fonctionnement (21), pour ajouter une valeur de puissance prédéfinie destinée à être consommée dans l'unité d'alimentation électrique auxiliaire de bâtiment de gare (1) à la valeur de tension de la puissance CA côté charge comme valeur de consigne de tension.

4. L'unité d'alimentation électrique auxiliaire de bâtiment de gare (1) selon l'une quelconque des revendications 1 à 3, comprenant :
un détecteur de direction du flux de puissance (16) configuré pour détecter la direction du flux de puissance indiquant la direction du flux de puissance électrique entre la ligne de distribution CA (200) et la deuxième sous-station (100), et pour délivrer les informations sur la direction du flux de puissance.
